# EUROPEAN PATENT APPLICATION

(11) **EP 4 819 712 A1**
(43) Date of publication of application: **07.10.2026**
(21) Application number: 24916736.2
(22) Date of filing: 25.12.2024
(51) Int. Cl.: H04W 72/04

(54) **COMMUNICATION METHOD AND RELATED DEVICE**

(30) Priority: 09.01.2024 CN 202410034432
(71) Applicant: Honor Device Co., Ltd., Shenzhen, Guangdong 518040 (CN)
(72) Inventor: CHI, Liangang, Shenzhen, Guangdong 518040 (CN); ZHANG, Jian, Shenzhen, Guangdong 518040 (CN)
(74) Representative: Henselmann, Alexander Gerhard
(86) International application number: PCT/CN2024/142221
(87) International publication number: WO 2025/148689

(57) **Abstract**

This application relates to the field of communication technologies, and provides a communication method and a related device. The method is applied to an electronic device, and includes: sending retransmission information of a physical downlink control channel PDCCH for a first system information block SIB 1; determining an available time-frequency domain position of an initial transmission and/or a retransmission of the SIB1 PDCCH; and sending the SIB1 PDCCH in the available time-frequency domain position of the initial transmission and/or the retransmission. Therefore, the SIB1 PDCCH is repeatedly sent for a plurality of times in the determined available time-frequency domain position, so that a corresponding transmission performance requirement can be satisfied, thereby reducing loss of wireless communication, enhancing downlink coverage, and improving communication efficiency.

## Description

This application claims priority to Chinese Patent Application No. 202410034432.8, filed with the China National Intellectual Property Administration on January 9, 2024 and entitled "COMMUNICATION METHOD AND RELATED DEVICE", which is incorporated herein by reference in its entirety.

### TECHNICAL FIELD

This application relates to the field of communication technologies, and in particular, to a communication method and a related device.

### BACKGROUND

Because a conventional terrestrial network cannot provide seamless coverage, especially in places where base stations cannot be deployed, such as at sea, in deserts, and in the air, a satellite communication technology emerges with the development of communication technologies, in particular, with the continuous development of a new-generation mobile communication technology, such as the fifth generation mobile communication technology (the fifth generation mobile networks, 5G for short).

The satellite communication technology refers to a communication technology performed by a radio communication device on the ground by using a satellite as a relay. The satellite communication system includes a satellite part and a terrestrial part. The terrestrial part includes a network device, such as a base station, and a terminal. The terminal may be user equipment (user equipment, UE). The base station may communicate with the terminal on a downlink (downlink) link or an uplink (uplink) link. Specifically, the uplink refers to a link through which the terminal sends data to the base station, and the downlink refers to a link through which the base station sends data to the terminal. Each base station usually has a coverage range, which is also referred to as a coverage region.

In the related art, to achieve the seamless coverage of a network through the satellite communication technology, the base station needs to send a plurality of downlink beams at the same time. However, the base station cannot focus energy in several beams, and therefore, cannot focus signal energy. Consequently, wireless communication has relatively large losses, and downlink coverage is limited. Therefore, how to enhance the downlink coverage and improve communication efficiency has become an important concern in the industry.

### SUMMARY

An objective of this application is to provide a communication method and a related device that can enhance downlink coverage and improve communication efficiency.

According to a first aspect, this application provides a communication method, applied to a network device such as a base station. The method includes: sending retransmission information of a physical downlink control channel PDCCH for a first system information block SIB1; determining an available time-frequency domain position of an initial transmission and/or a retransmission of the SIB1 PDCCH; and sending the SIB1 PDCCH in the available time-frequency domain position of the initial transmission and/or the retransmission. Therefore, the SIB1 PDCCH is repeatedly sent for a plurality of times in the determined available time-frequency domain position, so that a corresponding transmission performance requirement can be satisfied, thereby reducing loss of wireless communication, enhancing downlink coverage, and improving communication efficiency.

In some specific implementations, the retransmission information includes one or more of information indicating whether retransmission is performed, transmission period information, and information about a maximum number of retransmissions.

In some specific implementations, a length of the transmission period is a sum of a target number of time units. Determining an available time-domain position set for initial transmission and/or retransmission of the SIB1 PDCCH includes determining whether a start time unit in the transmission period satisfies the following equation: $\left({2}^{μ}\times 10{n}_{f}+{n}_{s}\right) modT = Offset$ where µ is a subcarrier spacing parameter, n_{f} is a system frame number, nₛ is a time unit number within the radio frame, T is the transmission period, a unit of T is time unit, and offset is an offset value of the time unit; determining the transmission period satisfying the above equation as the transmission period of the SIB1 PDCCH; in the transmission period of the SIB1 PDCCH, determining a time-domain position set for the initial transmission and/or retransmission of the SIB1 PDCCH. Therefore, the SIB1 PDCCH is repeatedly sent for a plurality of times in the determined available time-domain position, so that a corresponding transmission performance requirement can be satisfied, thereby reducing loss of wireless communication, enhancing downlink coverage, and improving communication efficiency.

In some specific implementations, a method for determining a time-domain position of the initial transmission includes: using a first time unit within the transmission period as an initial transmission time unit of the SIB1 PDCCH; or using a first configuration time unit of a PDCCH Type0 search space within the transmission period as the initial transmission time unit of the SIB1 PDCCH. Therefore, the SIB1 PDCCH is repeatedly sent for a plurality of times in the determined available time-domain position, so that a corresponding transmission performance requirement can be satisfied, thereby reducing loss of wireless communication, enhancing downlink coverage, and improving communication efficiency.

In some specific implementations, the method for determining the time-domain position of the initial transmission includes: using consecutive *N*₁ OFDM symbols within the initial transmission time unit as an initial transmission occasion for the SIB1 PDCCH, where a relative position of the initial transmission occasion within the initial transmission time unit is the same as a relative position of a transmission occasion specified by the PDCCH Type0 search space within a corresponding time unit; or predetermining, in a protocol, the relative position of the initial transmission occasion within the initial transmission time unit. Therefore, the SIB1 PDCCH is repeatedly sent for a plurality of times in the determined available time-domain position, so that a corresponding transmission performance requirement can be satisfied, thereby reducing loss of wireless communication, enhancing downlink coverage, and improving communication efficiency.

In some specific implementations, a method for determining the time-domain position set for the retransmission includes: determining a retransmission time unit index, where the retransmission time unit index within each transmission period is a sum of an initial transmission time unit index and a time unit offset, and the time unit offset is a sequence value; or predetermining, in a protocol, the retransmission time unit index within each transmission period.

In some specific implementations, the retransmission time unit index corresponds to a retransmission time unit, and a method for determining a position of a transmission occasion within the retransmission time unit includes: using consecutive OFDM symbols within the retransmission time unit as a retransmission occasion for the SIB1 PDCCH, where a relative position of the retransmission occasion within the retransmission time unit is the same as a relative position of a transmission occasion specified by the PDCCH Type0 search space within a corresponding time unit; or predetermining, in a protocol, the relative position of the retransmission occasion within the retransmission time unit. Therefore, the SIB1 PDCCH is repeatedly sent for a plurality of times in the determined available time-frequency domain position, so that a corresponding transmission performance requirement can be satisfied, thereby reducing loss of wireless communication, enhancing downlink coverage, and improving communication efficiency.

In some specific implementations, the sending retransmission information of a physical downlink control channel PDCCH for a first system information block SIB1 includes sending the retransmission information of the SIB1 PDCCH through a master information block MIB message.

In some specific implementations, a method for determining the available frequency-domain position of the initial transmission includes determining, as the frequency-domain position of the initial transmission of the SIB1 PDCCH, a frequency-domain position corresponding to CORESET#0 indicated by an MIB message.

In some specific implementations, a method for determining the available frequency-domain position set for the retransmission includes: determining a configuration of CORESET#0A for the retransmission of the SIB1 PDCCH based on frequency-domain configuration information of CORESET#0 indicated by the MIB message; and determining the available frequency-domain position set for the retransmission based on the configuration of CORESET#0A for the retransmission.

In some specific implementations, determining the configuration of the CORESET#0A includes: a start physical resource block index Start PRB index of the CORESET#0A being a sum of the Start PRB index of CORESET#0 and the physical resource block RB offset; and/or a start subcarrier index Start SC index of the CORESET#0A is a sum of a Start SC index of the CORESET#0 and a subcarrier SC offset. Therefore, the SIB1 PDCCH is repeatedly sent for a plurality of times in the determined available frequency domain position, so that a corresponding transmission performance requirement can be satisfied, thereby reducing loss of wireless communication, enhancing downlink coverage, and improving communication efficiency.

In some specific implementations, the RB offset and/or the SC offset is predetermined in a protocol or configured by a network.

In some specific implementations, sending the SIB1 PDCCH in the available time-frequency domain position of the initial transmission and/or the retransmission includes sending the SIB1 PDCCH at the available time-domain position set for the initial transmission and/or the retransmission of the SIB1 PDCCH. Therefore, the SIB1 PDCCH is repeatedly sent for a plurality of times in the determined available frequency domain position, so that a corresponding transmission performance requirement can be satisfied, thereby reducing loss of wireless communication, enhancing downlink coverage, and improving communication efficiency.

In some specific implementations, the sending retransmission information of a physical downlink control channel PDCCH for a first system information block SIB1 includes sending the retransmission information of the SIB1 PDCCH through a primary synchronization signal PSS or a secondary synchronization signal SSS.

According to a second aspect, this application provides a communication method, applied to a terminal device such as a mobile phone and a computer. The method includes: receiving retransmission information of a physical downlink control channel PDCCH for a first system information block SIB1; determining an available time-frequency domain position of an initial transmission and/or a retransmission of the SIB1 PDCCH; and receiving the SIB1 PDCCH in the available time-frequency domain position of the initial transmission and/or the retransmission. Therefore, the SIB1 PDCCH is repeatedly received for a plurality of times in the determined available time-frequency domain position of the retransmission, and pieces of information of an initial transmission and a retransmission of the SIB1 PDCCH are combined and detected, so that a corresponding transmission performance requirement can be satisfied, thereby reducing loss of wireless communication, enhancing downlink coverage, and improving communication efficiency.

In some specific implementations, the receiving the SIB1 PDCCH includes: receiving an initially transmitted PDCCH in a time-frequency domain position of the initial transmission of the SIB1 PDCCH; and receiving a retransmitted SIB1 PDCCH in a time-frequency domain position of the retransmission of the SIB1 PDCCH if downlink signal quality is less than or equal to a quality threshold. Therefore, the SIB1 PDCCH is repeatedly received for a plurality of times in the determined available time-frequency domain position of the retransmission, and pieces of information of an initial transmission and a retransmission of the SIB1 PDCCH are combined and detected, so that a corresponding transmission performance requirement can be satisfied, thereby reducing loss of wireless communication, enhancing downlink coverage, and improving communication efficiency.

In some specific implementations, the quality threshold is predetermined in a protocol or configured by a network.

In some specific implementations, a length of the transmission period is a sum of a target number of time units. Determining an available time-domain position set for initial transmission and/or retransmission of the SIB1 PDCCH includes determining whether a start time unit in the transmission period satisfies the following equation: $\left({2}^{μ}\times 10{n}_{f}+{n}_{s}\right) modT = Offset$ where µ is a subcarrier spacing parameter, n_{f} is a system frame number, nₛ is a time unit number within the radio frame, T is the transmission period, a unit of T is time unit, and offset is an offset value of the time unit; if the equation is satisfied, determining a time window determined by the start time unit and a duration T as the transmission period of the SIB1 PDCCH; and determining, in the transmission period of the SIB1 PDCCH, an available time-domain position set for the initial transmission and/or retransmission of the SIB1 PDCCH. Therefore, the SIB1 PDCCH is repeatedly received for a plurality of times in the determined available time-frequency domain position of the retransmission, and pieces of information of an initial transmission and a retransmission of the SIB1 PDCCH are combined and detected, so that a corresponding transmission performance requirement can be satisfied, thereby reducing loss of wireless communication, enhancing downlink coverage, and improving communication efficiency.

In some specific implementations, the method for determining the time-domain position of the initial transmission includes: using a first time unit within the transmission period as an initial transmission time unit of the SIB1 PDCCH; or using a first configuration time unit of a PDCCH Type0 search space within the transmission period as the initial transmission time unit of the SIB1 PDCCH. Therefore, the SIB1 PDCCH is repeatedly received for a plurality of times in the determined available time-frequency domain position of the retransmission, and pieces of information of an initial transmission and a retransmission of the SIB1 PDCCH are combined and detected, so that a corresponding transmission performance requirement can be satisfied, thereby reducing loss of wireless communication, enhancing downlink coverage, and improving communication efficiency.

In some specific implementations, the method for determining the time-domain position of the initial transmission includes: using consecutive *N*₁ OFDM symbols within the initial transmission time unit as an initial transmission occasion for the SIB1 PDCCH, where a relative position of the initial transmission occasion within the initial transmission time unit is the same as a relative position of a transmission occasion specified by the PDCCH Type0 search space within a corresponding time unit; or predetermining, in a protocol, the relative position of the initial transmission occasion within the initial transmission time unit. Therefore, the SIB1 PDCCH is repeatedly received for a plurality of times in the determined available time-frequency domain position of the retransmission, and pieces of information of an initial transmission and a retransmission of the SIB1 PDCCH are combined and detected, so that a corresponding transmission performance requirement can be satisfied, thereby reducing loss of wireless communication, enhancing downlink coverage, and improving communication efficiency.

In some specific implementations, a method for determining a time-domain position set for the retransmission includes: determining a retransmission time unit index, where the retransmission time unit index within each transmission period is a sum of an initial transmission time unit index and a time unit offset, and the time unit offset is a sequence value; or predetermining, in a protocol, the retransmission time unit index within each transmission period. Therefore, the SIB1 PDCCH is repeatedly received for a plurality of times in the determined available time-frequency domain position of the retransmission, and pieces of information of an initial transmission and a retransmission of the SIB1 PDCCH are combined and detected, so that a corresponding transmission performance requirement can be satisfied, thereby reducing loss of wireless communication, enhancing downlink coverage, and improving communication efficiency.

In some specific implementations, the retransmission time unit index corresponds to a retransmission time unit, and a method for determining a position of a transmission occasion within the retransmission time unit includes: using consecutive *N*₂ OFDM symbols within the retransmission time unit as a retransmission occasion for the SIB1 PDCCH, where a relative position of the retransmission occasion within the retransmission time unit is the same as a relative position of a transmission occasion specified by the PDCCH Type0 search space within a corresponding time unit; or predetermining, in a protocol, the relative position of the retransmission occasion within the retransmission time unit. Therefore, the SIB1 PDCCH is repeatedly received for a plurality of times in the determined available time-frequency domain position of the retransmission, and pieces of information of an initial transmission and a retransmission of the SIB1 PDCCH are combined and detected, so that a corresponding transmission performance requirement can be satisfied, thereby reducing loss of wireless communication, enhancing downlink coverage, and improving communication efficiency.

In some specific implementations, the receiving retransmission information of the physical downlink control channel PDCCH for the first system information block SIB1 includes receiving the retransmission information of the SIB1 PDCCH through a master information block MIB message.

In some specific implementations, a method for determining the frequency-domain position of the initial transmission includes determining a frequency-domain position corresponding to CORESET#0 indicated by an MIB message as a frequency-domain position of an initial transmission of a SIB1 PDCCH. Therefore, the SIB1 PDCCH is repeatedly received for a plurality of times in the determined available time-frequency domain position of the retransmission, and pieces of information of an initial transmission and a retransmission of the SIB1 PDCCH are combined and detected, so that a corresponding transmission performance requirement can be satisfied, thereby reducing loss of wireless communication, enhancing downlink coverage, and improving communication efficiency.

In some specific implementations, a method for determining an available frequency-domain position set for a retransmission of a SIB1 PDCCH includes: using frequency-domain configuration information of CORESET#0A indicated by an MIB message as frequency-domain configuration information of CORESET#0A for the retransmission of the SIB1 PDCCH; and determining the available frequency-domain position set for the retransmission based on the frequency-domain configuration information of CORESET#0A for a retransmission. Therefore, the SIB1 PDCCH is repeatedly received for a plurality of times in the determined available time-frequency domain position of the retransmission, and pieces of information of an initial transmission and a retransmission of the SIB1 PDCCH are combined and detected, so that a corresponding transmission performance requirement can be satisfied, thereby reducing loss of wireless communication, enhancing downlink coverage, and improving communication efficiency.

In some specific implementations, the method for determining the available frequency-domain position set for the retransmission of the SIB1 PDCCH includes: a start physical resource block index Start PRB index of CORESET#0A for the retransmission of the SIB1 PDCCH being a sum of a Start PRB index of CORESET#0 indicated by an MIB message and a physical resource block RB offset; and/or a start subcarrier index Start SC index of CORESET#0A being a sum of a Start SC index of the CORESET#0 and a subcarrier SC offset. Therefore, the SIB1 PDCCH is repeatedly received for a plurality of times in the determined available time-frequency domain position of the retransmission, and pieces of information of an initial transmission and a retransmission of the SIB1 PDCCH are combined and detected, so that a corresponding transmission performance requirement can be satisfied, thereby reducing loss of wireless communication, enhancing downlink coverage, and improving communication efficiency.

In some specific implementations, the RB offset and/or the SC offset is predetermined in a protocol or configured by a network.

In some specific implementations, receiving the SIB1 PDCCH in the available time-frequency domain position of the initial transmission and/or the retransmission includes receiving the SIB1 PDCCH at the available time-domain position set for the initial transmission and/or the retransmission of the SIB1 PDCCH. Therefore, the SIB1 PDCCH is repeatedly received for a plurality of times in the determined available time-frequency domain position of the retransmission, and pieces of information of an initial transmission and a retransmission of the SIB1 PDCCH are combined and detected, so that a corresponding transmission performance requirement can be satisfied, thereby reducing loss of wireless communication, enhancing downlink coverage, and improving communication efficiency.

In some specific implementations, the receiving retransmission information of a physical downlink control channel PDCCH for a first system information block SIB1 includes receiving the retransmission information of the SIB1 PDCCH through a primary synchronization signal PSS or a secondary synchronization signal SSS.

According to a third aspect, this application provides a network device. The electronic device includes a memory configured to store a computer program or computer instructions and a processor configured to execute the computer program or the computer instructions stored in the memory, to enable the electronic device to perform the method according to the first aspect.

According to a fourth aspect, this application provides a terminal device. The electronic device includes a memory configured to store a computer program or computer instructions and a processor configured to execute the computer program or the computer instructions stored in the memory, to enable the electronic device to perform the method according to the second aspect.

According to a fifth aspect, this application provides a communication system. The communication system includes a network device and a terminal device. The network device is configured to perform the method according to the first aspect, and the terminal device is configured to perform the method according to the second aspect.

According to a sixth aspect, this application provides a computer storage medium, configured to store a computer program. The computer program, when executed, is configured to implement the method according to the first aspect and the second aspect.

According to a seventh aspect, this application provides a communication apparatus, applied to an electronic device such as a base station, including: an information sending module, a position determining module and a repetition sending module, where the information sending module is configured to send retransmission information of a physical downlink control channel PDCCH for a first system information block SIB1; the position determining module is configured to determine an available time-frequency domain position of an initial transmission and/or a retransmission of the SIB1 PDCCH; and the repetition sending module is configured to send the SIB1 PDCCH in the available time-frequency domain position of the initial transmission and/or the retransmission. Therefore, the SIB1 PDCCH is repeatedly sent for a plurality of times in the determined available time-frequency domain position, so that a corresponding transmission performance requirement can be satisfied, thereby reducing loss of wireless communication, enhancing downlink coverage, and improving communication efficiency.

According to an eighth aspect, this application provides a communication apparatus, applied to an electronic device such as a mobile phone and a computer, including: a signal receiving module, a position determining module and a repetition receiving module, where the signal receiving module is configured to receive retransmission information of a physical downlink control channel PDCCH for a first system information block SIB1; the position determining module is configured to determine an available time-frequency domain position of an initial transmission and/or a retransmission of the SIB1 PDCCH; and the repetition receiving module is configured to receive the SIB1 PDCCH in the available time-frequency domain position of the initial transmission and/or the retransmission. Therefore, the SIB1 PDCCH is repeatedly sent for a plurality of times in the determined available time-frequency domain position of the retransmission, so that a corresponding transmission performance requirement can be satisfied, thereby reducing loss of wireless communication, enhancing downlink coverage, and improving communication efficiency.

Based on the foregoing technical solutions, this application has the following beneficial effects.

This application provides the communication method and the related device. The method includes: sending the retransmission information of the physical downlink control channel PDCCH for the first system information block SIB1; determining the available time-frequency domain position of the initial transmission and/or the retransmission of the SIB1 PDCCH, and sends the SIB1 PDCCH in the available time-frequency domain position of the initial transmission and/or the retransmission. Therefore, the SIB1 PDCCH is repeatedly sent for a plurality of times in the determined available time-frequency domain position, so that a corresponding transmission performance requirement can be satisfied, thereby reducing loss of wireless communication, enhancing downlink coverage, and improving communication efficiency.

### BRIEF DESCRIPTION OF DRAWINGS

FIG. 1 is an example diagram of a communication scenario between a base station and a terminal according to an embodiment of this application;
FIG. 2 is a flowchart of a communication method according to an embodiment of this application;
FIG. 3 is a flowchart of another communication method according to an embodiment of this application;
FIG. 4 is a schematic diagram of hardware composition of an electronic device according to an embodiment of this application;
FIG. 5 is a schematic diagram of hardware composition of another electronic device according to an embodiment of this application;
FIG. 6 is a schematic diagram of a communication apparatus according to an embodiment of this application; and
FIG. 7 is a schematic diagram of another communication apparatus according to an embodiment of this application.

### DESCRIPTION OF EMBODIMENTS

Terms "first", "second", "third", and the like in the specification, claims, and accompanying drawings of this application are used to distinguish between different objects rather than to limit a specific order.

In embodiments of this application, a phrase such as "in an example" or "for example" is used to represent giving an example, an illustration, or a description. Any embodiment or design solution described as "in an example" or "for example" in embodiments of this application should not be explained as being more preferred or advantageous than another embodiment or design scheme. Exactly, use of the phrase such as "in an example" or "for example" is intended to present a related concept in a specific manner.

Embodiments of this application are applied to a communication system. The communication system may be a second generation (2G) communication system, a third generation (3G) communication system, an LTE system, a fifth generation (5G) communication system, a hybrid architecture of a long term evolution (Long Term Evolution, LTE) and 5G, a 5G new radio (5G New Radio, 5G NR) system, a new communication system appearing in future communication development, and the like.

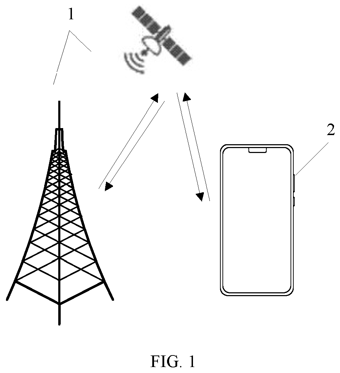

The communication system includes a network device and a terminal device. The network device may be a device that is on a network side and configured to provide a network communication function, and is also referred to as a network device or a network element in some cases. The network device may generally be a base station (including a functional unit of the base station, or a combination of functional units of the base station) or a core network unit. The core network unit may be a functional unit in a core network, and includes, but is not limited to, an access and mobility management function (Access and Mobility Management Function, AMF) unit or a session management function (Session Management Function, SMF) unit. The terminal device may be a device accessing a network, and generally, may be a terminal. Referring to FIG. 1, it is an example diagram of a communication scenario between a base station and a terminal according to an embodiment of this application. FIG. 1 includes a base station 1 and a terminal 2.

In this embodiment provided in this application, the base station may be any device having a radio transceiver function, and includes, but is not limited to: an evolved base station (an NodeB, an eNB, or an e-NodeB, an evolutional Node B) in a long term evolution (long term evolution, LTE), a base station (a gNodeB or a gNB) or a transmission receiving point/transmission reception point (transmission receiving point/transmission reception point, TRP) in new radio (new radio, NR), a 3GPP evolved base station, an access node in a Wi-Fi system, a wireless relay node, a wireless backhaul node, and the like. The base station may be a macro base station, a micro base station, a picocell, a small cell, a relay station, a balloon station, or the like. The base station may include one or more co-site or non-co-site transmission reception points (Transmission Reception Point, TRP). The base station may also be a wireless controller in a cloud radio access network (cloud radio access network, CRAN) scenario, a centralized unit (centralized unit, CU), and/or a distributed unit (distributed unit, DU). The base station may communicate with the terminal, or may communicate with the terminal through the relay station. The terminal may communicate with a plurality of base stations of different technologies. For example, the terminal may communicate with a base station supporting an LTE network, or may communicate with a base station supporting a 5G network, or may perform dual connectivity with a base station supporting an LTE network and a base station supporting a 5G network.

In this embodiment provided in this application, the terminal may be in various forms, for example, a mobile phone (mobile phone), a tablet computer (Pad), a computer with a wireless transceiver function, a virtual reality (virtual reality, VR) terminal device, an augmented reality (augmented reality, AR) terminal device, a wireless terminal in industrial control (industrial control), an on-board terminal device, a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a wearable terminal device, or the like. Sometimes, the terminal may also be referred to as a terminal device, user equipment (user equipment, UE), an access terminal device, an on-board terminal, an industrial control terminal, a UE unit, a UE station, a mobile station, a mobile console, a remote station, a remote terminal device, a mobile device, a UE terminal device, a terminal device, a wireless communication device, a UE proxy, a UE apparatus, or the like. The terminal may also be a fixed terminal or a mobile terminal.

As described above, because a conventional terrestrial network cannot provide seamless coverage, especially in places in which base stations cannot be deployed, such as the sea, the desert, and the air, a satellite communication technology emerges accordingly.

The satellite communication technology has the following several features. First, the satellite communication technology enables a large communication range. Within a range covered by electric waves transmitted by a satellite, communication may be performed between any two points. For regions not covered by a current cellular communication system or covered by the system with high costs, satellite communication may be used to resolve a communication problem. Second, the satellite communication technology is not easily affected by geological disasters and has high reliability. The satellite communication may be used to rapidly establish communication connections if cellular communication infrastructures are unavailable in extreme cases of disasters (such as an earthquake). Third, the satellite communication technology enables a lower latency and may be applied in industry. For example, for a latency-sensitive service of long-distance transmission, a latency of service transmission may be lowered through the satellite communication.

In the related art, in the inception discussion of the 3GPP R19 NTN (Non-Terrestrial Network) proposed by a standardization organization, such as the third generation partnership project 3GPP, considering that seamless coverage is achieved for the network by using the satellite communication technology, it is required that a plurality of downlink beams occur simultaneously for a base station. The beams are communication resources. The beam may be a wide beam, a narrow beam, or another type of a beam, and a technology for forming the beam may be a beamforming technology or another technical means.

However, because the base station cannot focus energy on several beams, aggregation of signals cannot be implemented. Consequently, a huge loss is caused for wireless communication, thereby limiting downlink coverage.

In view of this, this application provides a communication method and a related device. The method includes: sending retransmission information of a physical downlink control channel PDCCH for a first system information block SIB1; determining an available time-frequency domain position of an initial transmission and/or a retransmission of the SIB1 PDCCH; and sending the SIB1 PDCCH in the available time-frequency domain position of the initial transmission and/or the retransmission. Therefore, the SIB1 PDCCH is repeatedly sent for a plurality of times in the determined available time-frequency domain position, so that a corresponding transmission performance requirement can be satisfied, thereby reducing loss of wireless communication, enhancing downlink coverage, and improving communication efficiency.

To make the technical solutions of this application clearer and easier to understand, the communication method of this application is described below with reference to the accompanying drawings.

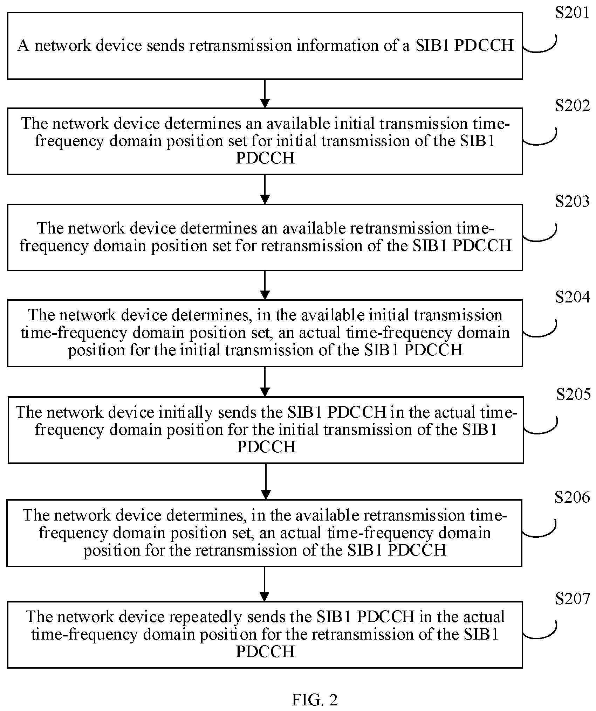

Referring to FIG. 2, it is a schematic diagram of a communication method according to an embodiment of this application. The communication method may be performed by a network device in a communication system. The network device may be a base station or the like. The method includes the following steps.

S201: A network device sends retransmission information of a SIB1 PDCCH.

A first system information block (System Information Block1, SIB1) message is carried on a physical downlink shared channel (Physical downlink shared channel, PDSCH). Therefore, first, the network device needs to search a common search space (Common search space, CSS) for a physical downlink control channel (Physical downlink control channel, PDCCH) that schedules the SIB1 PDSCH, that is, the SIB1 PDCCH. Subsequently, retransmission information of the SIB1 PDCCH is sent to the terminal device. The terminal device may be a mobile phone, a computer, or the like.

In the communication method provided in this embodiment of this application, the retransmission information may include one or more of a message indicating whether a retransmission is performed, a transmission period T agreed by the network device in a protocol, and a maximum number of retransmissions. A length of the transmission period T may be represented through a sum of one or more time units, and for example, represented through a quantity of radio frames (T=10 ms), or subframes (T=1 ms), or time slots (slot, T=125 ns). For example, one transmission period T may be 32 time slots, that is, T=1 us.

In other words, after obtaining the message indicating whether a retransmission is performed, the transmission period T agreed in a protocol, and the maximum number of retransmissions, the network device may send the retransmission information including the three to the terminal device.

In the communication method provided in this embodiment of this application, the retransmission information may further include one or more of information indicating a retransmission, the transmission period T indicated by the network device, and the maximum number of retransmissions. The information indicating a retransmission is more detailed information than the message indicating whether retransmission is performed, and for example, includes time slot offset value information or the like. This is not limited in this application. The transmission period T indicated by the network device is similar to the transmission period T agreed by the network device in a protocol, and has a length that may also be represented through a sum of one or more time units, for example, through a quantity of radio frames, subframes, or time slots.

In other words, after obtaining the information indicating a retransmission, the transmission period T, and the maximum number of retransmissions, the network device may send retransmission information consisting of the three to the terminal device.

In some specific implementations, the retransmission information of the SIB1 PDCCH may be sent through a primary synchronization signal (Primary Synchronization Signal, PSS), or a secondary synchronization signal (Secondary Synchronization Signal, SSS), or a master information block (Master Information Block, MIB).

The PSS and the SSS are both special physical layer signals and are used for radio frame synchronization. An MIB message carries most basic information, and these pieces of information relate to decoding of a PDSCH channel. After the network device sends the retransmission information of the SIB PDCCH to the terminal device through the MIB message, the terminal device can continually decode the SIB1 message by using a parameter in the MIB message only when the terminal device first decodes the MIB message.

S202: The network device determines an initial-transmission available time-frequency domain position set for an initial transmission of the SIB1 PDCCH.

Determining the initial-transmission available time-frequency domain position set for the initial transmission of the SIB1 PDCCH is to determine both an available time-domain position set and an available initial transmission frequency-domain position set for the initial transmission of the SIB1 PDCCH.

In some specific implementations, a frequency-domain position corresponding to CORESET#0 indicated by an MIB message may be determined as an initial transmission frequency-domain position of the SIB1 PDCCH. CORESET#0 refers to PDCCH information required by the terminal device for initially decoding the SIB1 message, that is, an initial CORESET configuration corresponding to the SIB1 PDCCH being initially sent to the terminal device.

In some specific implementations, the initial transmission time-domain position set for the initial transmission of the SIB1 PDCCH, that is, the initial transmission occasion set of the SIB1 PDCCH may be determined through the following several manners:
Manner 1: An initial transmission occasion set of a Type0-PDCCH search space specified by an R18 protocol (or a previous 3GPP NR protocol) is used as the initial transmission occasion set for the initial transmission of the SIB1 PDCCH.
Manner 2: A new initial transmission occasion set agreed in a protocol is used as the initial transmission occasion set for the initial transmission of the SIB1 PDCCH.
Manner 3: An initial transmission occasion set of a Type0-PDCCH search space specified by the R18 protocol (or the previous 3GPP NR protocol) and a new initial transmission occasion set agreed in a protocol are used as the initial transmission occasion set for the initial transmission of the SIB1 PDCCH.

It should be noted that, for ease of understanding, in the foregoing embodiments, an example in which the retransmission information of the SIB1 PDCCH is sent through the MIB message is used for description. A case in which the retransmission information of the SIB1 PDCCH is sent through the PSS or the SSS is similar to the foregoing method. Details are not described herein again. A specific manner for determining a CORESET configuration and an initial transmission occasion set for the initial transmission of the SIB1 PDCCH is not limited in this application.

It should be noted that a quantity of initial transmission occasions in an initial transmission occasion set is not limited in this application and may be one or more.

S203: The network device determines an available retransmission time-frequency domain position set for a retransmission of the SIB1 PDCCH.

Determining the available retransmission time-frequency domain position set for the retransmission of the SIB1 PDCCH is to determine both an available retransmission time-domain position set and an available retransmission frequency-domain position set for the retransmission of the SIB1 PDCCH.

In some specific implementations, a method for determining the available retransmission time-domain position set for the retransmission of the SIB1 PDCCH may be: based on CORESET#0 indicated by the MIB message, a new PMO set is agreed as a PMO set for the retransmission of the SIB1 PDCCH in a protocol.

In some specific implementations, a method for determining the available retransmission frequency-domain position set for the retransmission of the SIB1 PDCCH may include: first, determining a configuration of CORESET#0A for the retransmission of the SIB1 PDCCH based on frequency-domain configuration information of CORESET#0 indicated by the MIB message; and then, determining the available retransmission frequency-domain position set based on the configuration of CORESET#0A for the retransmission. Specifically, one or more of the following configurations of CORESET#0A may be agreed in a protocol:

First, it is agreed that a starting PRB index is equal to a starting PRB index of CORESET#0 for an initial transmission plus RB_Offset. That is, a starting physical resource module (Physical Resource Block, PRB) identifier (index) is updated to a sum of the PRB index of CORESET#0 and a radio link bear (Radio Bear, RB) offset.

Second, it is agreed that a starting subcarrier index is equal to a starting subcarrier index of CORESET#0 for an initial transmission plus SC_Offset. That is, a starting subcarrier (Single Carrier, SC) identifier index is updated to a sum of an SC index of CORESET#0 and an SC offset.

Third, it is agreed that a quantity of OFDM symbols is equal to a quantity of OFDM symbols CORESET#0 for an initial transmission plus Delta. That is, an identifier index of a quantity of orthogonal frequency division multiplexing symbols is updated to a sum of an OFDM index of CORESET#0 and an OFDM offset, Delta.

It should be noted that the RB_Offset, SC_Offset, and Delta are all agreed in a protocol or configured by a network.

It may be understood that the foregoing S203 and S204 are processes of obtaining, within a transmission period, an available initial transmission time-frequency domain position and/or an available retransmission time-frequency domain position for transiting the SIB1 PDCCH.

S204: The network device determines, in the available initial-transmission time-frequency domain position set, an actual time-frequency domain position of the initial transmission of the SIB1 PDCCH.

In some specific implementations, a manner for determining the actual time-domain position of the initial transmission of the SIB1 PDCCH is specifically as follows:

If the transmission period T of the retransmission information in step S201 is in a time unit of a slot, the time slot in which it occurs needs to satisfy the following Equation (1): $\left({2}^{μ}⋅10{n}_{f}+{n}_{s}\right) mod T = {Offset}_{slot}$ (1) where µ is a subcarrier spacing parameter, n_{f} is a system frame number, nₛ is a slot number within a radio frame, T is the transmission period, and offsetₛₗₒₜ is a period offset value. Specifically, offsetₛₗₒₜ is configured by a network or agreed in a protocol.

If the slot in the transmission period T satisfies Equation (1), the transmission period satisfying the equation is determined as the transmission period of the SIB1 PDCCH, so that the available time-domain position set for the initial transmission and/or retransmission of the SIB1 PDCCH is determined in the transmission period of the SIB1 PDCCH.

Subsequently, a first time unit (for example, a slot slot) within the transmission period is used as an initial transmission time unit of the SIB1 PDCCH. Alternatively, a first configuration time unit of a PDCCH Type0 search space within the transmission period is used as the initial transmission time unit of the SIB1 PDCCH.

Subsequently, consecutive *N*₁ OFDM symbols within the initial transmission time unit are used as an initial transmission occasion of the SIB1 PDCCH. A relative position of the *N*₁ OFDM symbols within the initial transmission time unit is the same as a relative position of a transmission occasion specified by the PDCCH Type0 search space within a corresponding time unit. Alternatively, the relative position of the *N*₁ OFDM symbols within the initial transmission time unit is predetermined in a protocol.

It should be noted that, the foregoing embodiment is described by using the transmission period T in the unit of the slot. If the transmission period T of the retransmission information in step S201 is in a unit of a radio frame or a subframe, it is similar to the foregoing equation. Details are not described herein again.

S205: The network device initially sends the SIB1 PDCCH in the actual time-frequency domain position of the initial transmission of the SIB1 PDCCH.

After the actual time-frequency domain position of the actual initial transmission of the SIB1 PDCCH is determined, the SIB1 PDCCH may be initially sent in the actual time-frequency domain position.

S206: The network device confirms, in an available retransmission time-frequency domain position set, an actual time-frequency domain position of the retransmission of the SIB1 PDCCH.

In some specific implementations, a method for determining a time-domain position set for a retransmission is specifically as follows: determining a retransmission time unit index, where the retransmission time unit index within each transmission period is a sum of an initial transmission time unit index and a time unit offset, and the time unit offset is a sequence value; or predetermining, in a protocol, the retransmission time unit index within each transmission period.

In addition, each retransmission time unit index has a retransmission time unit corresponding thereto. Then, a method for determining a transmission occasion within a retransmission time unit is specifically as follows: using consecutive *N*₂ OFDM symbols in the retransmission time unit as one retransmission occasion of the SIB1 PDCCH, where a relative position of the retransmission occasion in the retransmission time unit is the same as a relative position of the transmission occasion specified by the PDCCH Type0 search space within a corresponding time unit; or predetermining the relative position of the retransmission occasion in the retransmission time unit in a protocol.

S207: The network device repeatedly sends the SIB1 PDCCH in an actual time-frequency domain position of the retransmission of the SIB1 PDCCH.

In the actual time-frequency domain position of the retransmission of the SIB1 PDCCH, the retransmission of the SIB1 PDCCH is sequentially performed from front to back until a maximum number of retransmissions is reached.

It should be noted that, to reduce complexity of subsequent blind detection performed by a terminal device and save blind detection resources, the network device may further constrain a candidate PDCCH set (candidate PDCCH) in a search space before repeatedly sending the SIB1 PDCCH.

In some specific implementations, it may be constrained that a PDCCH candidate set for a retransmission is consistent with a PDCCH candidate set for an initial transmission, thereby reducing complexity of subsequent blind detection performed by a terminal device. For example, if a candidate PDCCH set for an initial transmission is 1, a candidate PDCCH set for a retransmission may also be constrained to 1.

In some other specific implementations, it may be constrained that the candidate PDCCH set for a retransmission is associated with the candidate PDCCH set for an initial transmission, so that a unique corresponding candidate PDCCH set for a retransmission can be presumed from the candidate PDCCH set for an initial transmission. It should be noted that this application does not limit a specific presumption rule.

In conclusion, this application discloses a communication method. The method is applied to a network device, such as a base station, and the method includes: sending retransmission information of a physical downlink control channel PDCCH for a first system information block SIB1; determining an available time-frequency domain position of an initial transmission and/or a retransmission of the SIB1 PDCCH; and sending the SIB1 PDCCH in the available time-frequency domain position of the initial transmission and/or the retransmission. Therefore, the SIB1 PDCCH is repeatedly sent for a plurality of times in the determined available time-frequency domain position, so that a corresponding transmission performance requirement can be satisfied, thereby reducing loss of wireless communication, enhancing downlink coverage, and improving communication efficiency.

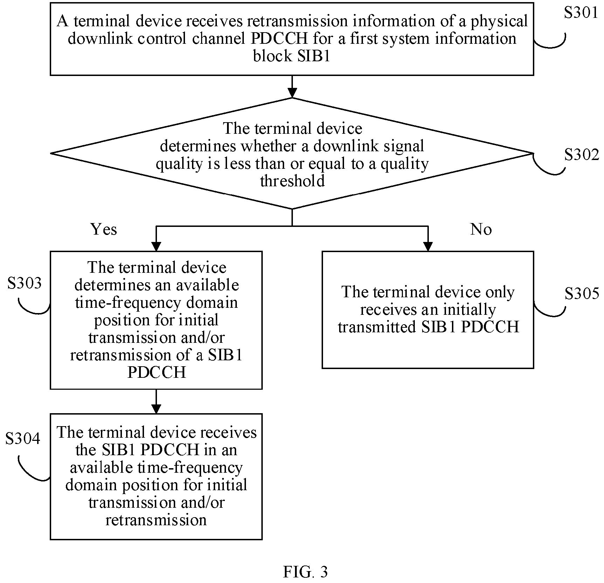

Referring to FIG. 3, it is a schematic diagram of another communication method according to an embodiment of this application. The communication method may be performed by a terminal device in a communication system, and the terminal device may include a mobile phone, a computer, and the like. The method includes the following steps.

S301: A terminal device receives retransmission information of a physical downlink control channel PDCCH for a first system information block SIB1.

S302: The terminal device determines whether downlink signal quality is less than or equal to a quality threshold, where if so, S303 is performed. If not, S305 is performed.

It may be understood that the quality threshold is a threshold for determining whether signal quality satisfies a requirement and is a threshold configured by a terminal device in advance in a protocol or configured by a network. A specific value of the quality threshold is not limited in this application.

In some specific implementations, measurement indicators for the signal quality include a reference signal received power SS-RSRP (Synchronization Signals Reference Signal Received Power), a reference signal received quality SS-RSRQ (Synchronization Signals Reference Signal Received Quality), and the like. The RSRP is used for evaluating a signal strength between a terminal device and a network device such as a base station. A higher value of the RSRP indicates a stronger received signal, and a unit of the RSRP is dBm (decibel milliwatt). The RSRQ is used for measuring quality of a received reference signal. A higher value of the RSRQ indicates better received signal quality, and the unit of the RSRQ is dB (decibel).

S303: The terminal device determines an available time-frequency domain position of an initial transmission and/or a retransmission of the SIB1 PDCCH.

S304: The terminal device receives the SIB1 PDCCH in the available time-frequency domain position of the initial transmission and/or the retransmission.

Only when downlink signal quality is less than or equal to a preset quality threshold, the SIB1 PDCCH needs to be repeatedly received for a plurality of times. Therefore, the SIB1 PDCCH is repeatedly received for a plurality of times in the determined available time-frequency domain position of the retransmission, and pieces of information of an initial transmission and a retransmission of the SIB1 PDCCH are combined and detected, so that a corresponding transmission performance requirement can be satisfied, thereby reducing loss of wireless communication, enhancing downlink coverage, and improving communication efficiency.

S305: The terminal device receives only an initially transmitted SIB1 PDCCH.

If the downlink signal quality is higher than the preset quality threshold, only the initially transmitted SIB1 PDCCH may be received.

It should be noted that S302 and S305 are optional steps in this embodiment of this application. S302 and S305 may not be performed when the communication method in embodiments of this application is performed.

In some specific implementations, a length of the transmission period is a sum of a target number of time units. Determining an available time-domain position set for an initial transmission and/or a retransmission of the SIB1 PDCCH includes determining whether a start time unit in a transmission period satisfies the following equation (2): $\left({2}^{μ}\times 10{n}_{f}+{n}_{s}\right) modT = Offset$ (2) where µ is a subcarrier spacing parameter, n_{f} is a system frame number, nₛ is a slot number within a radio frame, T is a transmission period, and offsetₛₗₒₜ is a period offset value; if the start time unit in the transmission period satisfies the equation, determining a time window determined by a start time unit and a duration T as the transmission period of the SIB1 PDCCH; and determining, in the transmission period of the SIB1 PDCCH, an available time-domain position set for an initial transmission and/or a retransmission of the SIB1 PDCCH.

In some specific implementations, a method for determining a time-domain position of an initial transmission includes: using a first time unit within the transmission period as an initial transmission time unit of the SIB1 PDCCH; or using a first configuration time unit of a PDCCH Type0 search space within the transmission period as the initial transmission time unit of the SIB1 PDCCH.

In some specific implementations, the method for determining the time-domain position of the initial transmission includes: using consecutive *N*₁ OFDM symbols within the initial transmission time unit as an initial transmission occasion for the SIB1 PDCCH, where a relative position of the initial transmission occasion within the initial transmission time unit is the same as a relative position of a transmission occasion specified by the PDCCH Type0 search space within a corresponding time unit; or predetermining, in a protocol, the relative position of the initial transmission occasion within the initial transmission time unit.

In some specific implementations, a method for determining a time-domain position set for a retransmission includes: determining a retransmission time unit index, where the retransmission time unit index within each transmission period is a sum of an initial transmission time unit index and a time unit offset, and the time unit offset is a sequence value; or predetermining, in a protocol, the retransmission time unit index within each transmission period.

In some specific implementations, the retransmission time unit index corresponds to a retransmission time unit, and a method for determining a position of a transmission occasion within the retransmission time unit includes: using consecutive *N*₂ OFDM symbols within the retransmission time unit as a retransmission occasion for the SIB1 PDCCH, where a relative position of the retransmission occasion within the retransmission time unit is the same as a relative position of a transmission occasion specified by the PDCCH Type0 search space within a corresponding time unit; or predetermining, in a protocol, the relative position of the retransmission occasion within the retransmission time unit.

In some specific implementations, the receiving retransmission information of the physical downlink control channel PDCCH for the first system information block SIB1 includes receiving the retransmission information of the SIB1 PDCCH through a master information block MIB message.

In some specific implementations, a method for determining the frequency-domain position of the initial transmission includes determining a frequency-domain position corresponding to CORESET#0 indicated by an MIB message as a frequency-domain position of an initial transmission of a SIB1 PDCCH.

In some specific implementations, a method for determining an available frequency-domain position set for a retransmission of a SIB1 PDCCH includes: using frequency-domain configuration information of CORESET#0A indicated by an MIB message as frequency-domain configuration information of CORESET#0A for the retransmission of the SIB1 PDCCH; and determining the available frequency-domain position set for the retransmission based on the frequency-domain configuration information of CORESET#0A for a retransmission.

In some specific implementations, the method for determining the available frequency-domain position set for the retransmission of the SIB1 PDCCH includes: a start physical resource block index Start PRB index of CORESET#0A for the retransmission of the SIB1 PDCCH being a sum of a Start PRB index of CORESET#0 indicated by an MIB message and a physical resource block RB offset; and/or a start subcarrier index Start SC index of CORESET#0A being a sum of a Start SC index of the CORESET#0 and a subcarrier SC offset.

In some specific implementations, the RB offset and/or the SC offset is predetermined in a protocol or configured by a network.

In some specific implementations, receiving the SIB1 PDCCH in the available time-frequency domain position of the initial transmission and/or the retransmission includes receiving the SIB1 PDCCH at the available time-domain position set for the initial transmission and/or the retransmission of the SIB1 PDCCH.

In some specific implementations, the receiving retransmission information of a physical downlink control channel PDCCH for a first system information block SIB1 includes receiving the retransmission information of the SIB1 PDCCH through a primary synchronization signal PSS or a secondary synchronization signal SSS.

In conclusion, this application discloses a communication method. The method is applied to a terminal device such as a mobile phone or a computer. In the method, by repeatedly receiving the SIB1 PDCCH in the determined available retransmission time-frequency domain position many times, the corresponding transmission performance requirement may be met, the loss of wireless communication may be reduced, the downlink coverage may be enhanced, and the communication efficiency may be improved.

Based on the foregoing communication method, this application further provides an electronic device configured to perform the foregoing communication method. Descriptions are provided below with reference to the embodiments.

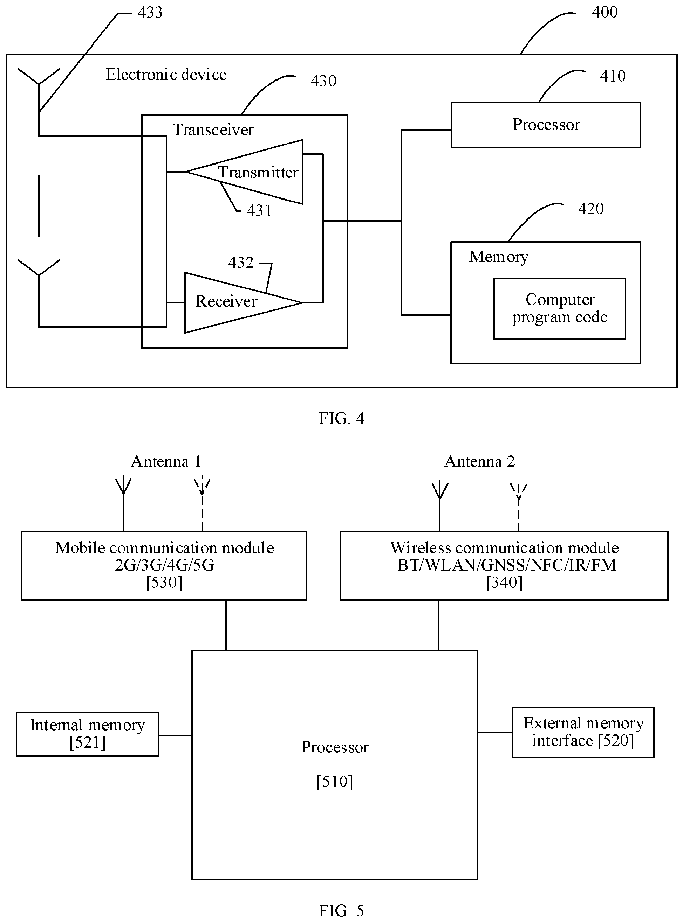

Referring to FIG. 4, it is a schematic diagram of hardware composition of an electronic device according to an embodiment of this application. The electronic device may be a network device, and includes, but is not limited to, a base station and a core network unit. FIG. 4 is a schematic structural diagram of a simplified base station. The base station includes a part 410, a part 420, and a part 430. The part 410 is mainly configured to perform baseband processing, control the base station, and the like. The part 410 is generally a control center of the base station, may be generally referred to as a processor, and is configured to control the base station to perform a processing operation on the network device side in the foregoing method embodiments. The part 420 is mainly configured to store computer program code and data. The part 430 is mainly configured to receive or send a radio frequency signal and for conversion between the radio frequency signal and a baseband signal. The part 430 may be generally referred to as a transceiver module, a transceiver, a transceiver circuit, a transceiver, or the like. The transceiver module of the part 430 may also be referred to as a transceiver, a transceiver machine, or the like. The transceiver module includes an antenna 433 and a radio frequency circuit (not shown in the figure). The radio frequency circuit is mainly configured to perform radio frequency processing. Optionally, a component configured to implement a receiving function in the part 430 may be considered as the receiver, and a component configured to implement a sending function may be considered as the transmitter. In other words, the part 430 includes a receiver 432 and a transmitter 431. The receiver may also be referred to as a receiving module, a receiver, a receiving circuit, or the like. The transmitter may be referred to as a transmitting module, a transmitter machine, a transmitting circuit, or the like.

The part 410 and the part 420 may include one or more boards. Each board may include one or more processors and one or more memories. The processor is configured to read and execute a program in the memory to implement a baseband processing function and control the base station. If a plurality of boards exist, the boards may be interconnected to enhance the processing capability. In an optional implementation, the plurality of boards may share one or more processors, or the plurality of boards share one or more memories, or the plurality of boards simultaneously share one or more processors.

For example, in an implementation, the transceiver module in the part 430 is configured to perform a process related to sending and receiving performed by the base station (network device) in the foregoing method embodiment. The processor in the part 410 is configured to perform a process related to processing performed by the base station in the foregoing method embodiment.

It should be understood that FIG. 4 is merely an example rather than a limitation, and the foregoing network devices including the processor, the memory, and the transceiver may not rely on the structure shown in FIG. 4.

Referring to FIG. 5, it is a schematic diagram of hardware composition of another electronic device according to an embodiment of this application. The electronic device may be a terminal device, and the terminal device may be a terminal, including but not limited to an electronic device such as a mobile phone or an intelligent wearable device (such as a smartwatch). A mobile phone is used as an example below. The electronic device may include a processor 510, an external memory interface 520, an internal memory 521, an antenna 1, an antenna 2, a mobile communication module 530, a wireless communication module 540, and the like.

It may be understood that the structure shown in this embodiment constitutes no specific limitation on the electronic device. In some other embodiments, the electronic device may include more or fewer components than those shown in the figure, some components may be combined, some components may be split, or a different component deployment may be used. The components shown in the figure may be implemented by using hardware, software, or a combination of software and hardware.

The processor 510 may include one or more processing units. For example, the processor 510 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent components, or may be integrated into one or more processors.

It may be understood that the interface connection relationship between the modules illustrated in this embodiment of the present invention is merely an example for description, and does not constitute a limitation on a structure of the electronic device. In some other embodiments of this application, the electronic device may also use an interface connection manner different from that in the foregoing embodiment, or use a combination of a plurality of interface connection manners.

The external memory interface 520 may be configured to connect to an external storage card such as a Micro SD card, to expand a storage capability of the electronic device. The external storage card communicates with the processor 510 through the external memory interface 520, to implement a data storage function. For example, files such as music and videos are stored into the external storage card.

The internal memory 521 may be configured to store computer executable program code, where the executable program code includes instructions. The processor 510 runs the instructions stored in the internal memory 521 to implement various functional applications and data processing of the electronic device. The internal memory 521 may include a program storage area and a data storage area. The program storage area may store an operating system, an application program required by at least one function (such as a sound playback function or an image playback function), and the like. The data storage area may store data (for example, audio data and an address book) and the like created when the electronic device is used. In addition, the internal memory 521 may include a high-speed random access memory, and may further include a non-volatile memory, for example, at least one magnetic disk storage device, a flash memory device, and a universal flash storage (universal flash storage, UFS). The processor 510 runs the instructions stored in the internal memory 521 and/or the instructions stored in the memory arranged in the processor, to implement various function applications and data processing of the electronic device.

A wireless communication function of the electronic device may be implemented through the antenna 1, the antenna 2, the mobile communication module 530, the wireless communication module 540, the modem processor, the baseband processor, and the like.

The antenna 1 and the antenna 2 are configured to transmit and receive an electromagnetic wave signal. Each antenna in the electronic device may be configured to cover one or more communication bands. Different antennas may further be multiplexed to improve antenna utilization. For example, the antenna 1 may be multiplexed as a diversity antenna of a wireless local area network. In some other embodiments, the antenna may be used in combination with a tuning switch.

The mobile communication module 530 may provide a wireless communication solution including 2G/3G/4G/5G and the like applicable to the electronic device. The mobile communication module 530 may include at least one filter, a switch, a power amplifier, a low noise amplifier (low noise amplifier, LNA), and the like. The mobile communication module 530 may receive an electromagnetic wave through the antenna 1, perform processing such as filtering and amplification on the received electromagnetic wave, and transmit a processed electromagnetic wave to the modem processor for demodulation. The mobile communication module 530 may further amplify a signal modulated by the modem processor and convert the signal into an electromagnetic wave through the antenna 1 for radiation. In some embodiments, at least some function modules of the mobile communication module 530 may be arranged in the processor 510. In some embodiments, at least some of the functional modules of the mobile communication module 530 may be arranged in a same device as at least some of the modules of the processor 510.

In some embodiments, the electronic device initiates or receives a call request through the mobile communication module 530 and the antenna 1.

In addition, an operating system runs on the foregoing components, for example, an iOS operating system, an Android operating system, or a Windows operating system. An application may be installed and run in the operating system. It may be clearly understood by a person skilled in the art that, for a convenient and brief description, the explanation and the beneficial effects of related contents in any electronic device provided above can refer to the corresponding method embodiment provided above. Details are not described herein again.

This application further provides a communication system. The communication system may include the network device (for example, a network device such as a base station) shown in FIG. 4 and the terminal device (for example, a terminal such as a mobile phone) shown in FIG. 5.

In this application, the terminal or the network device may include a hardware layer, an operating system layer running in the hardware layer, and an application layer running on the operating system layer. The hardware layer may include hardware such as a central processing unit (central processing unit, CPU), a memory management module (memory management unit, MMU), and a memory (also referred to as a main memory). An operating system at the operating system layer may be any one or more computer operating systems that implement service processing through a process (process), for example, a Linux operating system, a Unix operating system, an Android operating system, an iOS operating system, or a Windows operating system. The application layer may include an application such as a browser, an address book, word processing software, or instant messaging software.

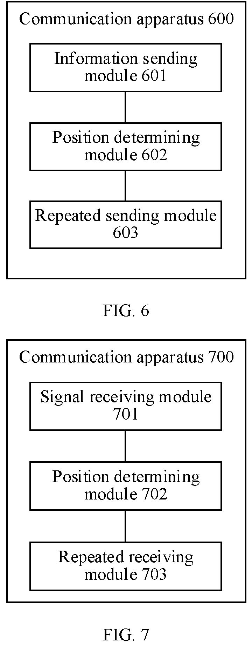

Referring to FIG. 6, it is a schematic diagram of a communication apparatus according to an embodiment of this application. The communication apparatus 600 is applied to an electronic device such as a base station, and includes: an information sending module 601, a position determining module 602, and a repetition sending module 603.

The information sending module 601 is configured to send retransmission information of a physical downlink control channel PDCCH for a first system information block SIB1. The position determining module 602 is configured to determine an available time-frequency domain position of an initial transmission and/or a retransmission of the SIB1 PDCCH. The repetition sending module 603 is configured to send the SIB1 PDCCH in the available time-frequency domain position of the initial transmission and/or the retransmission.

In conclusion, this application discloses a communication apparatus, by repeatedly sending the SIB1 PDCCH at the determined available time-frequency domain position many times, the corresponding transmission performance requirement may be met, the loss of wireless communication may be reduced, the downlink coverage may be enhanced, and the communication efficiency may be improved.

Referring to FIG. 7, it is a schematic diagram of another communication apparatus according to an embodiment of this application. The communication apparatus 700 is applied to an electronic device such as a mobile phone or a computer, and includes: a signal receiving module 701, a position determining module 702, and a repetition receiving module 703.

The signal receiving module 701 is configured to receive retransmission information of a physical downlink control channel PDCCH for a first system information block SIB1. The position determining module 702 is configured to determine an available time-frequency domain position of an initial transmission and/or a retransmission of the SIB1 PDCCH. The repetition receiving module 703 is configured to receive the SIB1 PDCCH in the available time-frequency domain position of the initial transmission and/or the retransmission.

In conclusion, this application discloses a communication apparatus. By repeatedly receiving the SIB1 PDCCH at the determined available retransmission time-frequency domain position many times, and combining and detecting the information of the initial transmission and retransmission of the SIB1 PDCCH, the corresponding transmission performance requirement may be met, the loss of wireless communication may be reduced, the downlink coverage may be enhanced, and the communication efficiency may be improved.

It may be clearly understood by a person skilled in the art that, for the purpose of convenient and brief description, for a detailed operating process of the system, device, and apparatus described above, reference may be made to the corresponding process in the foregoing method embodiment. Details are not described herein again.

The above descriptions and the above embodiments are only used to describe the technical solutions of this application, but not intended to limit this application. Although this application has been described in detail with reference to the foregoing embodiments, it should be understood by a person skilled in the art that the technical solutions described in the foregoing embodiments can still be modified, or some or all of technical features can be replaced by equivalents. However, these modifications or replacements will not cause the essence of corresponding technical solutions to depart from the scope of the technical solutions in embodiments of this application.

## Claims

1. A communication method, applied to a network device, the method comprising:
sending retransmission information of a physical downlink control channel PDCCH for a first system information block SIB1;
determining an available time-frequency domain position of an initial transmission and/or a retransmission of the SIB1 PDCCH; and
sending the SIB1 PDCCH in the available time-frequency domain position of the initial transmission and/or the retransmission.

2. The method according to claim 1, wherein the retransmission information comprises one or more of information indicating whether retransmission is performed, transmission period information, and information about a maximum number of retransmissions.

3. The method according to claim 2, wherein a length of the transmission period is a sum of a target number of time units, and the determining an available time-domain position of an initial transmission and/or a retransmission of the SIB1 PDCCH comprises:
determining whether a start time unit in the transmission period satisfies the following equation: $\left({2}^{μ}\times 10{n}_{f}+{n}_{s}\right) modT = Offset$
wherein µ is a subcarrier spacing parameter, n_{f} is a system frame number, nₛ is a time unit number within a radio frame, T is the transmission period, a unit of T is a time unit, and an offset is an offset value of the time unit;
determining, as the transmission period of the SIB1 PDCCH, a time window determined by the start time unit and a duration T if the start time unit in the transmission period satisfies the equation; and
determining, in the transmission period of the SIB1 PDCCH, an available time-domain position set for the initial transmission and/or the retransmission of the SIB1 PDCCH.

4. The method according to claim 2, wherein a method for determining a time-domain position of the initial transmission comprises:
using a first time unit within the transmission period as an initial transmission time unit of the SIB1 PDCCH; or
using a first configuration time unit of a PDCCH Type0 search space within the transmission period as the initial transmission time unit of the SIB1 PDCCH.

5. The method according to claim 4, wherein a method for determining a time-domain position of the initial transmission comprises:
using consecutive *N*₁ OFDM symbols within the initial transmission time unit as an initial transmission occasion for the SIB1 PDCCH, wherein a relative position of the initial transmission occasion within the initial transmission time unit is the same as a relative position of a transmission occasion specified by the PDCCH Type0 search space within a corresponding time unit; or
predetermining, in a protocol, the relative position of the initial transmission occasion within the initial transmission time unit.

6. The method according to claim 2, wherein a method for determining a time-domain position set for the retransmission comprises:
determining a retransmission time unit index, wherein the retransmission time unit index within each transmission period is a sum of an initial transmission time unit index and a time unit offset, and the time unit offset is a sequence value; or
predetermining, in a protocol, the retransmission time unit index within each transmission period.

7. The method according to claim 4, wherein the retransmission time unit index corresponds to a retransmission time unit, and a method for determining a position of a transmission occasion within the retransmission time unit comprises:
using consecutive *N*₂ OFDM symbols within the retransmission time unit as a retransmission occasion for the SIB1 PDCCH, wherein a relative position of the retransmission occasion within the retransmission time unit is the same as a relative position of a transmission occasion specified by the PDCCH Type0 search space within a corresponding time unit; or
predetermining, in a protocol, the relative position of the retransmission occasion within the retransmission time unit.

8. The method according to claim 1, wherein the sending retransmission information of a physical downlink control channel PDCCH for a first system information block SIB1 comprises:
sending the retransmission information of the SIB1 PDCCH through a master information block MIB message.

9. The method according to claim 1, wherein a method for determining a frequency-domain position of the initial transmission comprises:
determining, as the frequency-domain position of the initial transmission of the SIB1 PDCCH, a frequency-domain position corresponding to CORESET#0 indicated by an MIB message.

10. The method according to claim 9, wherein a method for determining an available frequency-domain position set for the retransmission of the SIB1 PDCCH comprises:
using, as frequency-domain configuration information of CORESET#0A of the retransmission of the SIB1 PDCCH, frequency-domain configuration information of CORESET#0 indicated by the MIB message; and
determining the available frequency-domain position set for the retransmission based on the frequency-domain configuration information of CORESET#0A of the retransmission.

11. The method according to claim 9, wherein a method for determining an available frequency-domain position set for the retransmission of the SIB1 PDCCH comprises:
a start physical resource block index Start PRB index of the CORESET#0A of the retransmission of the SIB1 PDCCH is a sum of a Start PRB index of CORESET#0 indicated by the MIB message and a physical resource block RB offset; and/or
a start subcarrier index Start SC index of the CORESET#0A is a sum of a Start SC index of the CORESET#0 and a subcarrier SC offset.

12. The method according to claim 11, wherein the RB offset and/or the SC offset is predetermined in a protocol or configured by a network.

13. The method according to claim 3, wherein the sending the SIB1 PDCCH in the available time-frequency domain position of the initial transmission and/or the retransmission comprises:
sending the SIB1 PDCCH at the available time-domain position set for the initial transmission and/or the retransmission of the SIB1 PDCCH.

14. The method according to claim 1, wherein the sending retransmission information of a physical downlink control channel PDCCH for a first system information block SIB1 comprises:
sending the retransmission information of the SIB1 PDCCH through a primary synchronization signal PSS or a secondary synchronization signal SSS.

15. A communication method, applied to a terminal device, the method comprising:
receiving retransmission information of a physical downlink control channel PDCCH for a first system information block SIB1;
determining an available time-frequency domain position of an initial transmission and/or a retransmission of the SIB1 PDCCH; and
receiving the SIB1 PDCCH in the available time-frequency domain position of the initial transmission and/or the retransmission.

16. The method according to claim 15, wherein the receiving the SIB1 PDCCH comprises:
receiving an initially transmitted PDCCH in a time-frequency domain position of the initial transmission of the SIB1 PDCCH; and
receiving a retransmitted SIB1 PDCCH in a time-frequency domain position of the retransmission of the SIB1 PDCCH if downlink signal quality is less than or equal to a quality threshold.

17. The method according to claim 16, wherein the quality threshold is predetermined in a protocol or configured by a network.

18. The method according to claim 15, wherein the retransmission information comprises one or more of information indicating whether retransmission is performed, transmission period information, and information about a maximum number of retransmissions.

19. The method according to claim 18, wherein a length of the transmission period is a sum of a target number of time units, and the determining an available time-domain position set for an initial transmission and/or a retransmission of the SIB1 PDCCH comprises:
determining whether a start time unit in the transmission period satisfies the following equation: $\left({2}^{μ}\times 10{n}_{f}+{n}_{s}\right) modT = Offset$
wherein µ is a subcarrier spacing parameter, n_{f} is a system frame number, nₛ is a time unit number within a radio frame, T is the transmission period, a unit of T is a time unit, and an offset is an offset value of the time unit;
determining, as the transmission period of the SIB1 PDCCH, a time window determined by the start time unit and a duration T if the start time unit in the transmission period satisfies the equation; and
determining, in the transmission period of the SIB1 PDCCH, an available time-domain position set for the initial transmission and/or the retransmission of the SIB1 PDCCH.

20. The method according to claim 18, wherein a method for determining a time-domain position of the initial transmission comprises:
using a first time unit within the transmission period as an initial transmission time unit of the SIB1 PDCCH; or
using a first configuration time unit of a PDCCH Type0 search space within the transmission period as the initial transmission time unit of the SIB1 PDCCH.

21. The method according to claim 20, wherein a method for determining a time-domain position of the initial transmission comprises:
using consecutive *N*₁ OFDM symbols within the initial transmission time unit as an initial transmission occasion for the SIB1 PDCCH, wherein a relative position of the initial transmission occasion within the initial transmission time unit is the same as a relative position of a transmission occasion specified by the PDCCH Type0 search space within a corresponding time unit; or
predetermining, in a protocol, the relative position of the initial transmission occasion within the initial transmission time unit.

22. The method according to claim 18, wherein a method for determining a time-domain position set for the retransmission comprises:
determining a retransmission time unit index, wherein the retransmission time unit index within each transmission period is a sum of an initial transmission time unit index and a time unit offset, and the time unit offset is a sequence value; or
predetermining, in a protocol, the retransmission time unit index within each transmission period.

23. The method according to claim 20, wherein the retransmission time unit index corresponds to a retransmission time unit, and a method for determining a position of a transmission occasion within the retransmission time unit comprises:
using consecutive *N*₂ OFDM symbols within the retransmission time unit as a retransmission occasion for the SIB1 PDCCH, wherein a relative position of the retransmission occasion within the retransmission time unit is the same as a relative position of a transmission occasion specified by the PDCCH Type0 search space within a corresponding time unit; or
predetermining, in a protocol, the relative position of the retransmission occasion within the retransmission time unit.

24. The method according to claim 15, wherein the receiving retransmission information of a physical downlink control channel PDCCH for a first system information block SIB1 comprises:
receiving the retransmission information of the SIB1 PDCCH through a master information block MIB message.

25. The method according to claim 15, wherein a method for determining a frequency-domain position of the initial transmission comprises:
determining, as the frequency-domain position of the initial transmission of the SIB1 PDCCH, a frequency-domain position corresponding to CORESET#0 indicated by an MIB message.

26. The method according to claim 25, wherein a method for determining an available frequency-domain position set for the retransmission of the SIB1 PDCCH comprises:
using, as frequency-domain configuration information of CORESET#0A of the retransmission of the SIB1 PDCCH, frequency-domain configuration information of CORESET#0A indicated by the MIB message; and
determining the available frequency-domain position set for the retransmission based on the frequency-domain configuration information of CORESET#0A of the retransmission.

27. The method according to claim 25, wherein a method for determining an available frequency-domain position set for the retransmission of the SIB1 PDCCH comprises:
a start physical resource block index Start PRB index of the CORESET#0A of the retransmission of the SIB1 PDCCH is a sum of a Start PRB index of CORESET#0 indicated by the MIB message and a physical resource block RB offset; and/or
a start subcarrier index Start SC index of the CORESET#0A is a sum of a Start SC index of the CORESET#0 and a subcarrier SC offset.

28. The method according to claim 27, wherein the RB offset and/or the SC offset is predetermined in a protocol or configured by a network.

29. The method according to claim 19, wherein the receiving the SIB1 PDCCH in the available time-frequency domain position of the initial transmission and/or the retransmission comprises:
receiving the SIB1 PDCCH at the available time-domain position set for the initial transmission and/or the retransmission of the SIB1 PDCCH.

30. The method according to claim 15, wherein the receiving retransmission information of a physical downlink control channel PDCCH for a first system information block SIB1 comprises:
receiving the retransmission information of the SIB1 PDCCH through a primary synchronization signal PSS or a secondary synchronization signal SSS.

31. A network device, wherein the network device comprises:
a memory, configured to store a computer program or computer instructions; and
a processor, configured to execute the computer program or the computer instructions stored in the memory, to enable the electronic device to perform the method according to any one of claims 1 to 14.

32. A terminal device, wherein the terminal device comprises:
a memory, configured to store a computer program or computer instructions; and
a processor, configured to execute the computer program or the computer instructions stored in the memory, to enable the electronic device to perform the method according to any one of claims 15 to 30.

33. A communication system, wherein the system comprises a network device and a terminal device, the network device is configured to perform the method according to any one of claims 1 to 14, and the terminal device is configured to perform the method according to any one of claims 15 to 30.

34. A computer storage medium, configured to store a computer program, wherein the computer program, when executed, is configured to implement the method according to any one of claims 1 to 30.
